# EUROPEAN PATENT APPLICATION

(11) **EP 4 625 734 A1**
(43) Date of publication of application: **01.10.2025**
(21) Application number: 22966389.3
(22) Date of filing: 22.12.2022
(51) Int. Cl.: H02H 3/087

(54) **WIRING MODULE, COMBINER BOX AND CONVERTER**

(30) Priority: 22.11.2022 CN 202223111155 U
(71) Applicant: Sungrow Power Supply Co., Ltd., Hefei, Anhui 230088 (CN)
(72) Inventor: CHEN, Peng, Hefei, Anhui 230088 (CN); SUN, Shuai, Hefei, Anhui 230088 (CN); LIN, Leiming, Hefei, Anhui 230088 (CN); SHEN, Zhanliang, Hefei, Anhui 230088 (CN)
(74) Representative: Zacco Norway AS
(86) International application number: PCT/CN2022/140966
(87) International publication number: WO 2024/108709

(57) **Abstract**

Provided in the present application are a wiring module, a combiner box and a converter. In the wiring module, one side of a first switch thereof serves as an input terminal positive pole and is connected to a positive electrode of at least one direct-current power supply, and one side of a second switch thereof serves as an input terminal negative pole and is connected to a negative electrode of at least one direct-current power supply. In addition, there is less than or equal to one direct-current power supply to which any input terminal positive pole is connected and to which any input terminal negative pole is also connected, that is, no parallel connection relationship is present between different direct-current power supplies. Therefore, in the event of a reverse connection fault in a direct-current power supply, as long as a switch connected to same is disconnected, a short-circuit current between the reversely-connected direct-current power supply and any properly-connected direct-current power supply can be avoided, thereby effectively achieving fault isolation.

## Description

The present application claims priority to Chinese Patent Application No. 202223111155.1, titled "WIRING MODULE, COMBINER BOX AND CONVERTER", filed on November 22, 2022 with the China National Intellectual Property Administration, which is incorporated herein by reference in its entirety.

### FIELD

The present disclosure relates to the technical field of power electronics, and in particular to a wiring module, a combiner box and a converter.

### BACKGROUND

In a photovoltaic system, N photovoltaic strings are usually connected to a DC/DC converter through corresponding direct-current switches. The direct-current switches usually each have a breaking capacity, which may be manually controlled to perform breaking or controlled by a controller in a device where the direct-current switches is located to perform breaking. When a fault, such as a reverse connection fault, a short-circuit fault or a grounding fault occurs in a photovoltaic string, the direct-current switch is manually controlled or controlled by the controller to break a connection between the photovoltaic string and the DC/DC converter, so that the photovoltaic string is physically disconnected from the DC/DC converter.

In the conventional solution, in the event of the reverse connection fault, a loop where the reverse connection fault is located may still exist even if the corresponding switch is opened. A short-circuit current still exists between a photovoltaic string in the reverse connection and a photovoltaic string in a proper connection that are connected to one switch, which may result in safety hazards, such as fire in the event of an arc fault in a circuit.

### SUMMARY

According to the present disclosure, a wiring module, a combiner box and a converter are provided, to solve the problem of still existence of the short-circuit current after the direct-current switch is opened in the conventional technology, and to achieve fault isolation.

To achieve the above objectives, following technical solutions are provided according to the present disclosure.

In a first aspect, a wiring module is provided according to the present disclosure. The wiring module includes: a first switch and a second switch; where
a side of each of the first switch serves as a positive input terminal of the wiring module, and is configured to connect a positive electrode of at least one direct-current power supply;
a side of each of the second switch serves as a negative input terminal of the wiring module, and is configured to connect a negative electrode of at least one direct-current power supply; and
a direct-current power supply to which any of the positive input terminal is connected and to which any of the negative input terminal is connected is in a quantity of less than or equal to 1.

In an embodiment, the other sides of the first switches are connected in parallel, and a parallel connection point serves as a positive output terminal of the wiring module; and the other sides of the second switches are connected in parallel, and a parallel connection point serves as a negative output terminal of the wiring module.

In an embodiment, the other sides of the first switches serve as respective positive output terminals of the wiring module, and the other sides of the second switches serve as respective negative output terminals of the wiring module; and the respective positive output terminals are connected in parallel, and the respective negative output terminals are connected in parallel.

In an embodiment, the wiring module has at least one positive output terminal, and each of the at least one positive output terminal is connected to the other side of at least one of the first switch; the wiring module has at least one negative output terminal, and each of the at least one negative output terminal is connected to the other side of at least one of the second switch; where the at least one positive output terminal is connected in parallel, and the at least one negative output terminal is connected in parallel; or, the at least one positive output terminal is connected in parallel with a positive output terminal of at least another of the wiring module in a one-to-one correspondence, and the at least one negative output terminal is connected in parallel with a negative output terminal of the at least another of the wiring module in a one-to-one correspondence.

In an embodiment, the at least one direct-current power supply connected to each of the first switch and the at least one direct-current power supply connected to each of the second switch each are in a quantity of less than or equal to 2; the at least one direct-current power supply connected to each of the first switch is in a quantity of less than or equal to 2, and the at least one direct-current power supply connected to each of the second switch is in a quantity of less than or equal to 3; or the at least one direct-current power supply connected to each of the first switch is in a quantity of less than or equal to 3, and the at least one direct-current power supply connected to each of the second switch is in a quantity of less than or equal to 2.

In an embodiment, both the first switch and the second switch are opened in response to a fault of at least one of the direct-current power supplies connected to the wiring module.

In an embodiment, both the first switch and the second switch are closed in response to no fault or fault recovery of the direct-current power supplies connected to the wiring module.

In an embodiment, the first switch and the second switch each are in a quantity of greater than or equal to 2; the first switch is in a quantity of 1, and the second switch is equal to the direct-current power supplies connected to the wiring module in quantity; or the first switch is equal to the direct-current power supplies connected to the wiring module in quantity, and the second switch is in a quantity of 1.

In an embodiment, the direct-current power supplies connected to the wiring module is in a quantity of 4, and the first switch and the second switch each are in a quantity of 2, where each of the first switches is connected to two of the direct-current power supplies, and each of the second switches is connected to two of the direct-current power supplies.

In an embodiment, the direct-current power supplies connected to the wiring module is in a quantity of 5, and the first switch and the second switch each are in a quantity of 3, where two of the first switches each are connected to two of the direct-current power supplies, and the other first switch is connected to one of the direct-current power supplies; and two of the second switches each are connected to two of the direct-current power supplies, and the other second switch is connected to one of the direct-current power supplies.

In an embodiment, direct-current power supplies connected to the wiring module is in a quantity of 5, the first switch is in a quantity of 3, and the second switch is in a quantity of 2, where two of the first switches each are connected to two of the direct-current power supplies, and the other first switch is connected to one of the direct-current power supplies; and one of the second switches is connected to two of the direct-current power supplies, and the other second switch is connected to three of the direct-current power supplies.

In an embodiment, direct-current power supplies connected to the wiring module is in a quantity of 6, and the first switch and the second switch each are in a quantity of 3, where each of the first switches is connected to two of the direct-current power supplies, and each of the second switches is connected to two of the direct-current power supplies.

In an embodiment, direct-current power supplies connected to the wiring module is in a quantity of 6, the first switch is in a quantity of 3, and the second switch is in a quantity of 2, where, each of the first switches is connected to two of the direct-current power supplies, and each of the second switches is connected to three of the direct-current power supplies.

In a second aspect, a wiring module is provided according to the present disclosure. The wiring module includes a first switch and a second switch; where
a side of each of the first switch serves as a positive input terminal of the wiring module, and is configured to connect a positive electrode of at least one direct-current power supply;
a side of each of the second switch serves as a negative input terminal of the wiring module, and is configured to connect a negative electrode of at least one direct-current power supply; and
the direct-current power supplies connected to the wiring module are not connected in parallel in response to opening the first switch and the second switch.

In an embodiment, the other sides of the first switches are connected in parallel, and a parallel connection point serves as a positive output terminal of the wiring module; and the other sides of the second switches are connected in parallel, and a parallel connection point serves as a negative output terminal of the wiring module;
the other sides of the first switches serve as respective positive output terminals of the wiring module, and the other sides of the second switches serve as respective negative output terminal of the wiring module, the respective positive output terminals are connected in parallel, and the respective negative output terminals are connected in parallel; or
the wiring module has at least one positive output terminal, and each of the at least one positive output terminal is connected to the other side of at least one of the first switch; the wiring module has at least one negative output terminal, and each of the at least one negative output terminal is connected to the other side of at least one of the second switch, wherein
   the at least one positive output terminal is connected in parallel, and the at least one negative output terminal is connected in parallel; or,
   the at least one positive output terminal is connected in parallel with a positive output terminal of at least another of the wiring module in a one-to-one correspondence, and the at least one negative output terminal is connected in parallel with a negative output terminal of at least another of the wiring module in a one-to-one correspondence.

In an embodiment, the at least one direct-current power supply connected to each of the first switch and the at least one direct-current power supply connected to each of the second switch each are in a quantity of less than or equal to 2; the at least one direct-current power supply connected to each of the first switch is in a quantity of less than or equal to 2, and the at least one direct-current power supply connected to each of the second switch is in a quantity of less than or equal to 3; or, the at least one direct-current power supply connected to each of the first switch is in a quantity of less than or equal to 3, and the at least one direct-current power supply connected to each of the second switch is in a quantity of less than or equal to 2.

In an embodiment, both the first switch and the second switch are opened in response to a fault of at least one of the direct-current power supplies connected to the wiring module; and both the first switch and the second switch are closed in response to no fault or fault recovery of the direct-current power supplies connected to the wiring module.

In an embodiment, the first switch and the second switch each are in a quantity of greater than or equal to 2; the first switch is in a quantity of 1, and the second switch is equal to the direct-current power supplies connected to the wiring module in quantity; or, the first switch is equal to the direct-current power supplies connected to the wiring module in quantity, and the second switch is in a quantity of 1.

In an embodiment, the direct-current power supplies connected to the wiring module is in a quantity of 4, the first switch and the second switch each are in a quantity of 2, each of the first switches is connected to two of the direct-current power supplies, and each of the second switches is connected to two of the direct-current power supplies;
the direct-current power supplies connected to the wiring module is in a quantity of 5, the first switch and the second switch each are in a quantity of 3, two of the first switches each are connected to two of the direct-current power supplies, and the other first switch is connected to one of the direct-current power supplies; and two of the second switches each are connected to two of the direct-current power supplies, and the other second switch is connected to one of the direct-current power supplies;
direct-current power supplies connected to the wiring module is in a quantity of 5, the first switch is in a quantity of 3, and the second switch is in a quantity of 2; two of the first switches each are connected to two of the direct-current power supplies, and the other first switch is connected to one of the direct-current power supplies; and one of the second switches is connected to two of the direct-current power supplies, and the other second switch is connected to three of the direct-current power supplies;
direct-current power supplies connected to the wiring module is in a quantity of 6, the first switch and the second switch each are in a quantity of 3; each of the first switches is connected to two of the direct-current power supplies, and each of the second switches is connected to two of the direct-current power supplies; or
direct-current power supplies connected to the wiring module is in a quantity of 6, the first switch is in a quantity of 3, and the second switch is in a quantity of 2; each of the first switches is connected to two of the direct-current power supplies, and each of the second switches is connected to three of the direct-current power supplies.

In a third aspect, a combiner box is provided according to the present disclosure. The combiner box includes the wiring module according to any one of the first aspect or any one of the second aspect. Each of the input terminals of the wiring module serves as an input terminal of the combiner box, and is configured to connect a direct-current power supply; and an output terminal of the wiring module is connected to an output terminal of the combiner box.

In an embodiment, the direct-current power supply is a photovoltaic string and/or an energy storage battery.

In an embodiment, the combiner box further includes a DC/DC converter; where the DC/DC converter is arranged between the output terminal of the wiring module and the output terminal of the combiner box.

In an embodiment, the combiner box further includes a fusing device arranged on an output transmission branch of the wiring module.

In a fourth aspect, a converter is provided according to the present disclosure. The converter includes a DC/AC converter and at least one of the wiring module according to any one of the first aspect or any one of the second aspect; each of the input terminals of the at least one wiring module serves as an input terminal of the converter, and is configured to connect a direct-current power supply; an output terminal of the at least one wiring module is connected to a direct-current side of the DC/AC converter; and an alternating-current side of the DC/AC converter serves as an output terminal of the converter.

In an embodiment, the direct-current power supply is a photovoltaic string and/or an energy storage battery.

In an embodiment, the converter further includes at least one DC/DC converter; where an input terminal of the at least one DC/DC converter is connected to the output terminal of the at least one wiring module; and an output terminal of the at least one DC/DC converter is connected to the direct-current side of the DC/AC converter.

In an embodiment, the at least one DC/DC converter is in a quantity of greater than 1, the direct-current power supply connected to at least one of the DC/DC converters is a photovoltaic string, and the direct-current power supply connected to at least one of the DC/DC converters is an energy storage battery.

In an embodiment, the converter further includes: a fusing device arranged on an output transmission branch of the at least one wiring module.

In the wiring module according to the present disclosure, a side of each of the first switch serves as a positive input terminal of the wiring module, and is configured to connect a positive electrode of at least one direct-current power supply; a side of each of the second switch serves as a negative input terminal of the wiring module, and is configured to connect a negative electrode of at least one direct-current power supply; and a direct-current power supply to which any of the positive input terminal is connected and to which any of the negative input terminal is connected is in a quantity of less than or equal to 1, that is, different direct-current power supplies are not connected in parallel, so that as long as a switch connected to a direct-current power supply is opened in the event of a reverse connection fault in the direct-current power supply, a short-circuit current between the direct-current power supply in the reverse connection and a direct-current power supply in a proper connection that are connected to the same switch can be avoided, thereby effectively achieving fault isolation.

### BRIEF DESCRIPTION OF THE DRAWINGS

In order to more clearly illustrate technical solutions in embodiments of the present disclosure or in the conventional technology, drawings to be used in the description of the embodiments or the conventional technology are briefly described below. Apparently, the drawings in the following description show only some embodiments of the present disclosure, and other drawings may be obtained by those skilled in the art from the drawings without any creative work.
FIG. 1a is a schematic diagram of a connection relationship between photovoltaic strings and direct-current switches according to the conventional technology;
FIG. 1b is a schematic diagram of another connection relationship between photovoltaic strings and direct-current switches according to the conventional technology;
FIG. 2a is a schematic diagram of a short-circuit current loop in a case of a photovoltaic string in a reverse connection corresponding to the structure shown in FIG. 1a;
FIG. 2b is a schematic diagram of a short-circuit current loop in a case of a photovoltaic string in a reverse connection corresponding to the structure shown in FIG. 1b;
FIG. 3a is a schematic structural diagram illustrating that a wiring module is connected to four photovoltaic strings according to an embodiment of the present disclosure;
FIG. 3b is a schematic structural diagram illustrating that a wiring module is connected to four photovoltaic strings according to another embodiment of the present disclosure;
FIG. 4a is a schematic structural diagram illustrating that a wiring module is connected to five photovoltaic strings according to an embodiment of the present disclosure;
FIG. 4b is a schematic structural diagram illustrating that a wiring module is connected to five photovoltaic strings according to another embodiment of the present disclosure;
FIG. 5a is a schematic structural diagram illustrating that a wiring module is connected to six photovoltaic strings according to an embodiment of the present disclosure;
FIG. 5b is a schematic structural diagram illustrating that a wiring module is connected to six photovoltaic strings according to another embodiment of the present disclosure;
FIG. 5c is a schematic structural diagram illustrating that a wiring module is connected to six photovoltaic strings according to another embodiment of the present disclosure;
FIG. 6a is a schematic structural diagram illustrating that a wiring module is connected to four photovoltaic strings according to another embodiment of the present disclosure;
FIG. 6b is a schematic diagram illustrating that two wiring modules are connected in parallel in an intersecting manner according to an embodiment of the present disclosure;
FIG. 7a is a schematic structural diagram of a combiner box according to an embodiment of the present disclosure;
FIG. 7b is a schematic structural diagram of a combiner box according to another embodiment of the present disclosure;
FIG. 7c is a schematic structural diagram of a combiner box according to another embodiment of the present disclosure;
FIG. 8a is a schematic structural diagram of a converter according to an embodiment of the present disclosure; and
FIG. 8b is a schematic structural diagram of a converter according to another embodiment of the present disclosure.

### DETAILED DESCRIPTION

The technical solutions in the embodiments of the present disclosure are described clearly and completely as follows in conjunction with the drawings in the embodiments of the present disclosure. It is apparent that the described embodiments are only some of the embodiments according to the present disclosure, rather than all the embodiments. Any other embodiments obtained by those skilled in the art based on the embodiments of the present disclosure without any creative work fall within the protection scope of the present disclosure.

In the present disclosure, the terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

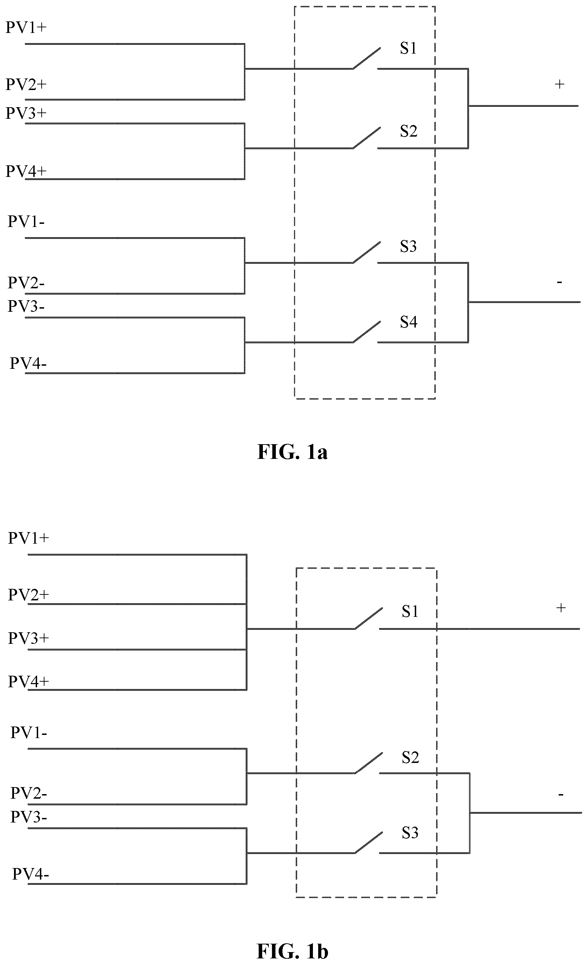

For example, a DC/DC converter is connected to four photovoltaic strings. FIG. 1a or FIG. 1b illustrates a connection relationship between photovoltaic strings and direct-current switches (such as S1 to S4 shown in FIG. 1a, or S1 to S3 shown in FIG. 1b) in the conventional technology.

As shown in FIG. 1a, a photovoltaic string PV1 is connected in parallel with a photovoltaic string PV2. Positive electrodes of the two photovoltaic strings PV1 and PV2 are connected to a positive input terminal of a DC/DC converter through a switch S1, and negative electrodes of the two photovoltaic strings PV1 and PV2 are connected to a negative input terminal of the DC/DC converter through a switch S3. A photovoltaic string PV3 is connected in parallel with a photovoltaic string PV4. Positive electrodes of the two photovoltaic strings PV3 and PV4 are connected to the positive input terminal of the DC/DC converter through a switch S2, and negative electrodes of the two photovoltaic strings PV3 and PV4 are connected to the negative input terminal of the DC/DC converter through a switch S4.

In FIG. 1b, the positive electrodes of the photovoltaic strings PV1 to PV4 are connected to the positive input terminal of the DC/DC converter through the same switch S1, and a connection relationship between the negative electrodes of the photovoltaic strings PV1 to PV4 and the direct-current switches are the same as that in FIG. 1a.

For the above two structures, when all switches are closed for the first time, if one of multiple photovoltaic strings connected to the switches is in an external reverse connection, current of a photovoltaic string in a proper connection (i.e., not in the reverse connection) may flow back into the photovoltaic string in the reverse connection, easily burning out a cable of the photovoltaic string in the reverse connection due to overcurrent. If these switches are provided with control circuits, upon detecting the photovoltaic string in the reverse connection, an inverter timely issues an instruction to trip the switches for protection after the switches are closed.

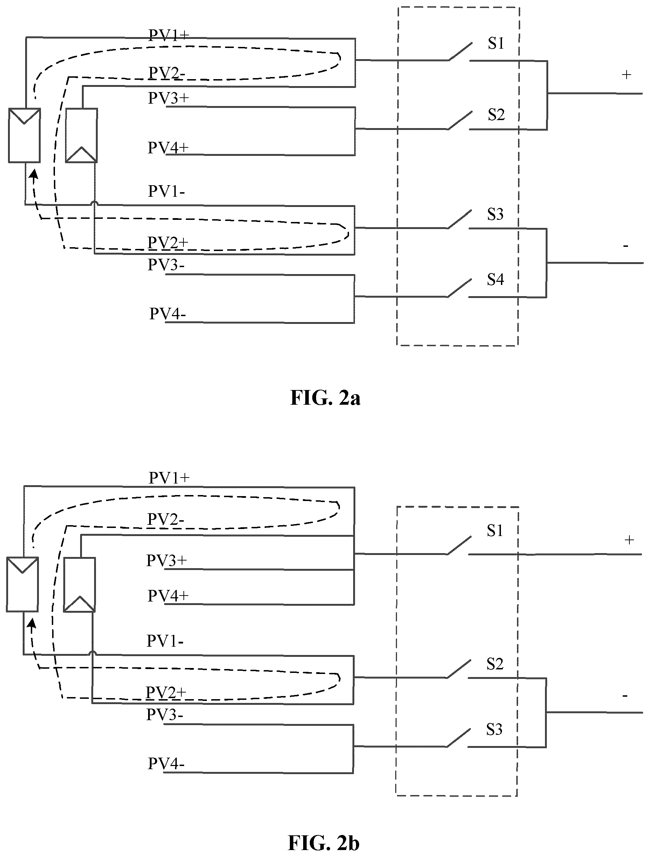

However, in the design manners of switches as shown in FIG. 1a and FIG. 1b, in the event of a reverse connection fault, for example, the photovoltaic string PV2 is in the reverse connection, a loop where the reverse connection fault is located still exists after a switch trips, leading to a short-circuit current still flowing through a circuit where the photovoltaic string in the reverse connection is located, as shown by the dotted lines with arrows in FIG. 2a and FIG. 2b, which may result in safety hazards such as fire in the event of an arc fault in a circuit.

Therefore, a wiring module is provided according to the present disclosure, to solve a problem of still existence of the short-circuit current after the direct-current switch is opened in the conventional technology, and to achieve fault isolation.

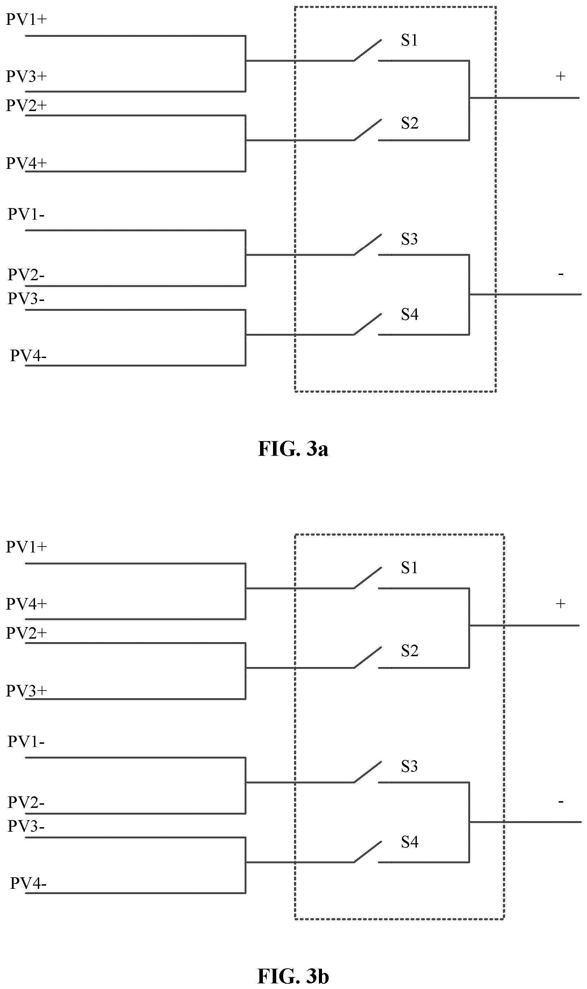

The wiring module is configured to connect at least two direct-current power supplies. The direct-current power supplies may be photovoltaic strings or energy storage batteries. The following description is made by an example with the direct-current power supplies being the photovoltaic strings. The wiring module includes a first switch (such as switches shown in upper half portions in FIG. 3a to FIG. 5b) and a second switch (such as switches shown in lower half portions in FIG. 3a to FIG. 5b). In practical applications, both the number of the first switch and the number of the second switch each are set to be greater than or equal to 2. Alternatively, the number of the first switch is set to 1, and the number of the second switch is equal to the total number N of the photovoltaic strings connected to the wiring module. Alternatively, the number of the first switch is equal to the total number N of the photovoltaic strings connected to the wiring module, and the number of the second switch is set to 1.

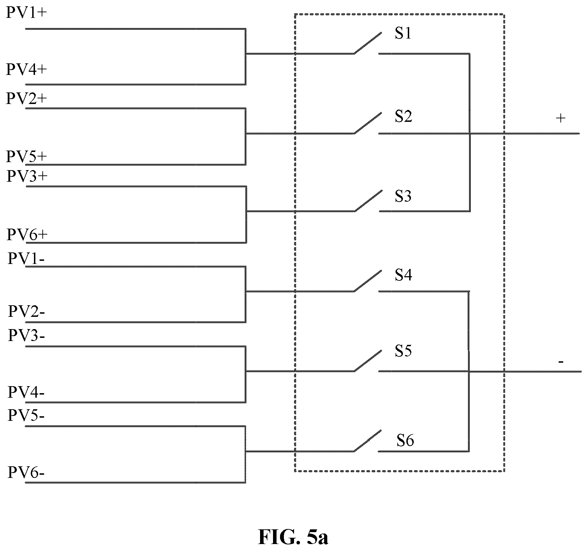

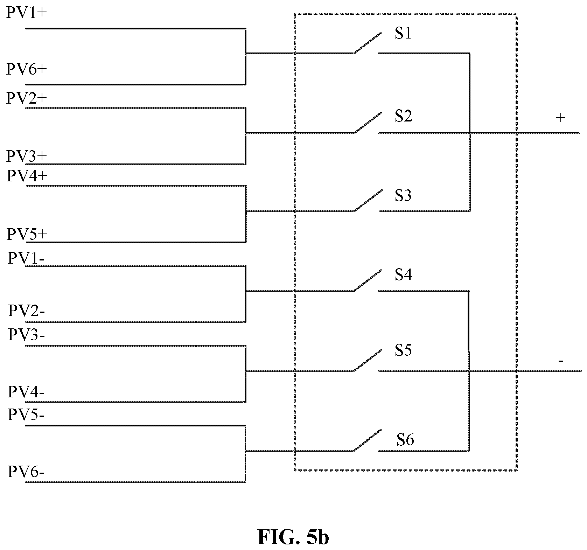

A side of each first switch serves as a positive input terminal of the wiring module, and is connected to a positive electrode of at least one photovoltaic string. A side of each second switch serves as a negative input terminal of the wiring module, and is connected to a negative electrode of at least one photovoltaic string. That is, the number of the photovoltaic string connected to each switch is greater than or equal to 1, and may be 1, 2, 3 or more, depending on the application environment. All implementations fall within the protection scope of the present disclosure. In actual applications, each first switch is connected to the same number of the photovoltaic string or different numbers of the photovoltaic string, and each second switch is connected to the same number of the photovoltaic string or different numbers of the photovoltaic string. FIGS. 3a, 3b, 5a and 5b exemplarily illustrate that each switch is connected to the same number of the photovoltaic string, and the number of the connected photovoltaic string is not limited herein, depending on the application environment. All implementations fall within the protection scope of the present disclosure.

In the embodiment, a direct-current power supply to which any of the positive input terminal is connected and to which any of the negative input terminal is connected is in a quantity of less than or equal to 1, in order to avoid a short-circuit current between a photovoltaic string in the reverse connection and a photovoltaic string in a proper connection that are connected to one switch in a case that the photovoltaic string is in the reverse connection. That is, the positive electrode of at most one photovoltaic string is connected to any one first switch, and the negative electrode of the photovoltaic string is connected to any one second switch. Therefore, even if a photovoltaic string is in the reverse connection, no short-circuit current flows through the photovoltaic string in the reverse connection after the switch connected to the photovoltaic string is opened, thereby effectively achieving fault isolation.

In order to achieve the above, in an embodiment, each switch is connected to two photovoltaic strings, so as to facilitate a combination of different photovoltaic strings in an intersecting manner. In a case that the number of the photovoltaic string is an odd number, the remaining one photovoltaic string is connected to one first switch and one second switch. That is, in an embodiment, the photovoltaic string connected to each of the first switch and the photovoltaic string connected to each of the second switch each are in a quantity of less than or equal to 2. In another embodiment, the photovoltaic string connected to each of the first switch and the photovoltaic string connected to each of the second switch each are in a quantity of less than or equal to 3. In another embodiment, the photovoltaic string connected to one of the first switch and the second switch is in a quantity of less than or equal to 2, and the photovoltaic string connected to the other one is in a quantity of less than or equal to 3. The number of the photovoltaic string connected to each switch depends on the application environment. All implementations fall within the protection scope of the present disclosure.

For the wiring module according to the embodiment, the photovoltaic string to which any one of the first switches is connected and to which any one of the second switches is connected is in a quantity of less than or equal to 1. That is, the positive electrodes and the negative electrodes of the photovoltaic strings are combined in the intersecting manner, and different photovoltaic strings are not connected in parallel, so that as long as a switch connected to a photovoltaic string is opened in the event of a reverse connection fault in the photovoltaic string, a short-circuit current between the photovoltaic string in the reverse connection and a photovoltaic string in a proper connection that are connected to the same switch can be avoided, thus completely isolating the photovoltaic strings from each other, avoiding a current loop and an occurrence of fire.

It should be noted that the first switch and the second switch may be the same type of switch, such as a trip switch, a mechanical switch, an electric switch or an electronic switch, depending on the application environment. As long as both the first switch and the second switch are closed when the photovoltaic strings connected to the wiring module are normal, and can be automatically opened when any photovoltaic string connected to the wiring module has a short-circuited fault, a reverse connection fault, a grounding fault or other fault.

It should be noted that all the switches in the wiring module may be manually controlled or controlled by a control circuit. In a case that the switches are controlled by the control circuit, when a rear-stage converter detects that a photovoltaic string externally connected to the switch has a short-circuited fault, a reverse connection fault, a grounding fault or other fault if the switch is manually closed, the wiring module can be proactively opened, or other unclosed switches can be locked and fails to be closed, thereby further improving safety. In addition, an automatic closing function is further triggered in response to a fault recovery of the photovoltaic string connected to the wiring module.

Based on the above embodiment, the wiring module is described in detail under different total numbers N of photovoltaic strings according to the embodiment hereinafter.
(1) Assuming that the total number of the photovoltaic strings connected to the wiring module is 4, that is, N=4, the number of the first switch is set to 2 and the number of the second switch is set to 2. In this case, in the wiring module, each of the two first switches is connected to two of the photovoltaic strings, and each of the two second switches is also connected to two of the photovoltaic strings. Detailed references may be made to FIG. 3a or FIG. 3b.

As shown in FIG. 3a, the negative electrodes (PV1- to PV4-) of the four photovoltaic strings are divided into two groups. For example, PV1- is connected in parallel with PV2- to form a group and the group is connected to the second switch S3, and PV3- is connected in parallel with PV4- to form a group and the group is connected to the second switch S4. In addition, the positive electrodes (PV1+ to PV4+) of the four photovoltaic strings are also divided into two groups. For example, PV1+ is connected in parallel with PV3+ to form a group and the group is connected to the first switch S1, and PV2+ is connected in parallel with PV4+ to form a group and the group is connected to the first switch S2.

As shown in FIG. 3b, the configuration of the second switch is the same as that in FIG. 3a, and is not repeated herein. For the configuration of the first switch, PV1+ is connected in parallel with PV4+ to form a group and the group is connected to the first switch S1, and PV2+ is connected in parallel with PV3+ to form a group and the group is connected to the first switch S2.

(2) Assuming that the total number of the photovoltaic strings connected to the wiring module is 5, that is, N=5, the number of the first switch is set to 3 and the number of the second switch is set to 3. In this case, in the wiring module, two of the first switches each are connected to two of the photovoltaic strings, the other first switch is connected to one of the photovoltaic strings, two of the second switches each are connected to two of the photovoltaic strings, and the other second switch is connected to one of the photovoltaic strings.

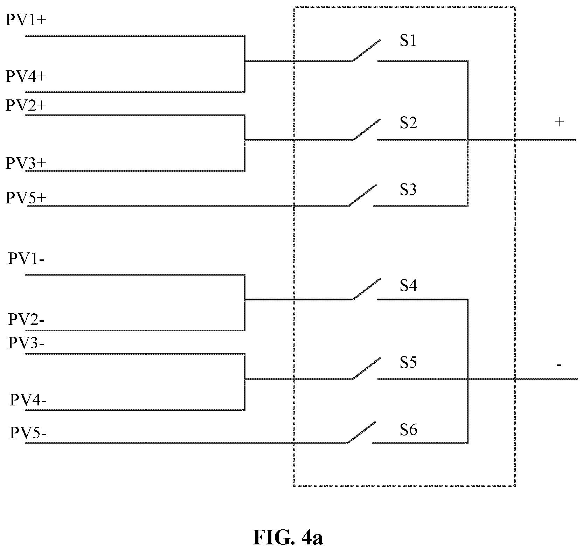

As shown in FIG. 4a, the negative electrodes (PV1- to PV5-) of the five photovoltaic strings are divided into three groups. For example, PV1- is connected in parallel with PV2- to form a group and the group is connected to the second switch S4, PV3- is connected in parallel with PV4- to form a group and the group is connected to the second switch S5, and PV5- serves as a group alone and is connected to the second switch S6. In addition, the positive electrodes (PV1+ to PV5+) of the five photovoltaic strings are also divided into three groups. For example, PV1+ is connected in parallel with PV4+ to form a group and the group is connected to the first switch S1, PV2+ is connected in parallel with PV3+ to form a group and the group is connected to the first switch S2, and PV5+ serves as a group alone and is connected to the second switch S3.

In another embodiment, the configuration of the second switches is the same as the configuration in FIG. 4a, and the configuration of the first switches may be as follows. PV1+ is connected in parallel with PV3+ to form a group and the group is connected to the first switch S1, and PV2+ is connected in parallel with PV4+ to form a group and the group is connected to the first switch S2.

(3) Assuming that the total number of the photovoltaic strings connected to the wiring module is 5, that is, N=5, the number of the first switch is set to 3 and the number of the second switch is set to 2. In this case, in the wiring module, two of the first switches each are connected to two of the photovoltaic strings, the other first switch is connected to one of the photovoltaic strings, one of the second switches is connected to two of the photovoltaic strings, and the other second switch is connected to three of the photovoltaic strings.

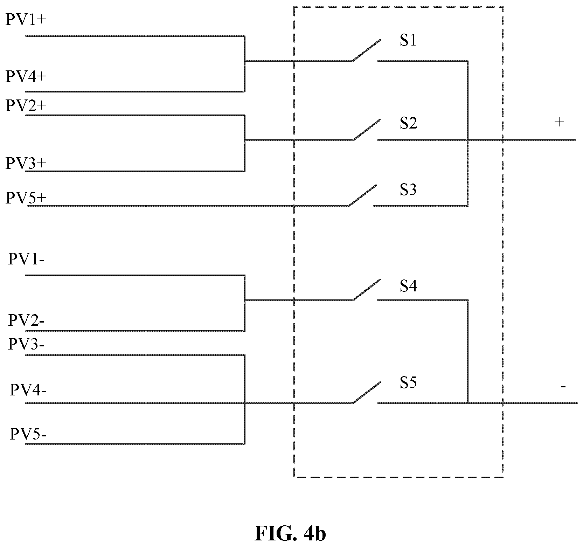

As shown in FIG. 4b, the negative electrodes (PV1- to PV5-) of the five photovoltaic strings are divided into two groups. For example, PV1- is connected in parallel with PV2- to form a group and the group is connected to the second switch S4, and PV3-, PV4- and PV5-are connected in parallel to form a group and the group is connected to the second switch S5. In addition, the positive electrodes (PV1+ to PV5+) of the five photovoltaic strings are divided into three groups. For example, PV1+ is connected in parallel with PV4+ to form a group and the group is connected to the first switch S1, PV2+ is connected in parallel with PV3+ to form a group and the group is connected to the first switch S2, and PV5+ serves as a group alone and is connected to the second switch S3.

(4) Assuming that the total number of the photovoltaic strings connected to the wiring module is 6, that is, N=6, the number of the first switches is set to 3 and the number of second switches is set to 3. In this case, in the wiring module, each of the first switches is connected to two of the photovoltaic strings, and each of the second switches is also connected to two of the photovoltaic strings. Detailed reference may be made to FIG. 5a or FIG. 5b.

As shown in FIG. 5a, the negative electrodes (PV1- to PV6-) of the six photovoltaic strings are divided into three groups. For example, PV1- is connected in parallel with PV2- to form a group and the group is connected to the second switch S4, PV3- is connected in parallel with PV4- to form a group and the group is connected to the second switch S5, and PV5- is connected in parallel with PV6- to form a group and the group is connected to the second switch S6. In addition, the positive electrodes (PV1+ to PV6+) of the six photovoltaic strings are also divided into three groups. For example, PV1+ is connected in parallel with PV4+ to form a group and the group is connected to the first switch S1, PV2+ is connected in parallel with PV5+ to form a group and the group is connected to the first switch S2, and PV3+ is connected in parallel with PV6+ to form a group and the group is connected to the first switch S3.

As shown in FIG. 5b, the configuration of the second switches is the same as the configuration in FIG. 5a and is not repeated herein. For the configuration of the first switches, PV1+ is connected in parallel with PV6+ to form a group and the group is connected to the first switch S1, PV2+ is connected in parallel with PV3+ to form a group and the group is connected to the first switch S2, and PV4+ is connected in parallel with PV5+ to form a group and the group is connected to the first switch S3.

(5) Assuming that the total number of the photovoltaic strings connected to the wiring module is 6, that is, N=6, the number of the first switch is set to 3 and the number of the second switch is set to 2. In this case, in the wiring module, each of the first switches is connected to two of the photovoltaic strings, and each of the second switches is connected to three of the photovoltaic strings.

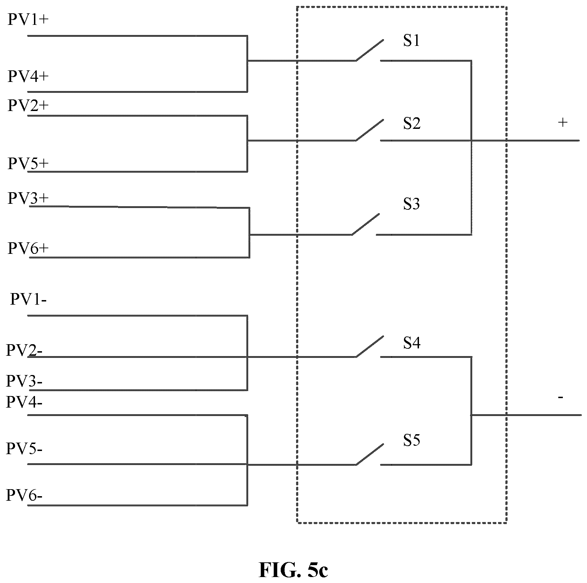

As shown in FIG. 5c, the negative electrodes (PV1- to PV6-) of the six photovoltaic strings are divided into two groups. For example, PV1-, PV2- and PV3- are connected in parallel to form a group and the group is connected to the second switch S4, PV4-, PV5- and PV6- are connected in parallel to form a group and the group is connected to the second switch S5. In addition, the positive electrodes (PV1+ to PV6+) of the six photovoltaic strings are divided into three groups. For example, PV1+ is connected in parallel with PV4+ to form a group and the group is connected to the first switch S1, PV2+ is connected in parallel with PV5+ to form a group and the group is connected to the first switch S2, and PV3+ is connected in parallel with PV6+ to form a group and the group is connected to the first switch S3.

In practical applications, the total number N of the photovoltaic strings connected to the wiring module may be 7, 8 or more. In a case that the total number N of the photovoltaic strings is other numbers, connection relationships between the respective electrodes and the switches of the wiring module may be deduced in the same manner, and are not repeated herein. As long as the number of the photovoltaic string connected to both any one of the first switches and connected to any one of the second switches is less than or equal to 1, a switch connected to a photovoltaic string may be opened in the event of a reverse connection fault in the photovoltaic string, avoiding the short-circuit current between the photovoltaic string in the reverse connection and any one photovoltaic string in the proper connection, thereby effectively achieving the fault isolation.

On the basis of the above embodiments, an output side of the wiring module is described in detail according to the embodiment hereinafter.
(1) As shown in FIGS. 3a to 5c, all the first switches are connected in parallel inside the wiring module and all the second switches are connected in parallel inside the wiring module.

The other sides of all the first switches, i.e., the sides that are not connected to a photovoltaic string, are connected in parallel to form a connection point, and the connection point serves as a positive output terminal of the wiring module. The other sides of all the second switches, i.e., the sides that are not connected to a photovoltaic string, are connected in parallel to form a connection point, and the connection point serves as a negative output terminal of the wiring module.

The output terminals of the wiring module are configured to connect an input terminal of a rear-stage device, such as an input terminal of a DC/DC converter in a photovoltaic inverter system, or a direct-current side of a DC/AC converter, depending on the application environment. All implementations fall within the protection scope of the present disclosure.

(2) All the first switches are connected in parallel outside the wiring module and all the second switches are connected in parallel outside the wiring module.

The other sides of the first switches serve as respective positive output terminals of the wiring module, and the other sides of the second switches serve as respective negative output terminals of the wiring module.

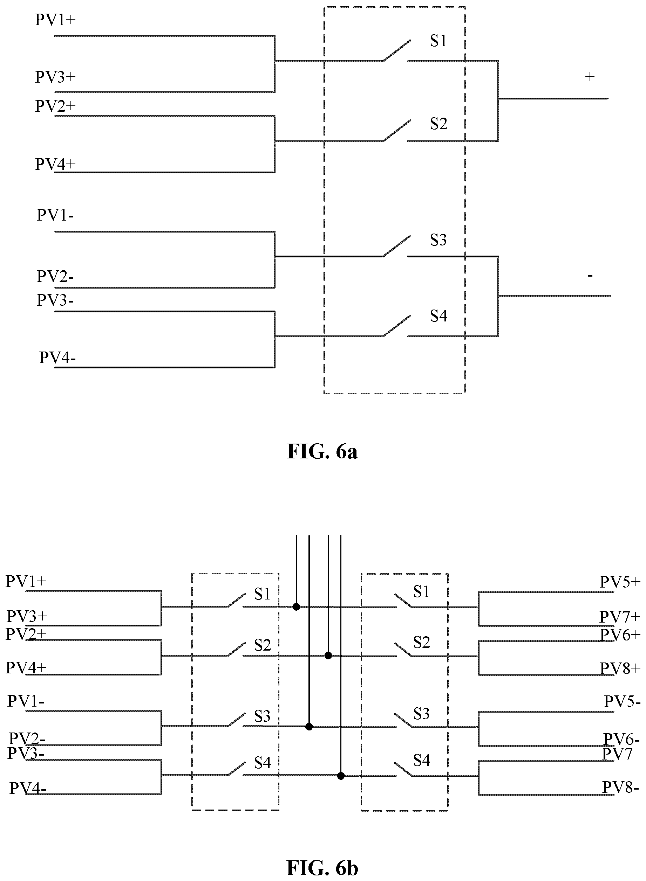

All the first switches are connected in parallel outside the wiring module and all the second switches are connected in parallel outside the wiring module, so as to achieve an external convergence function. In FIG. 6a, the structure shown in FIG. 3a is taken as an example to illustrate that the respective positive output terminals are connected in parallel, and the respective negative output terminals are connected in parallel.

(3) All the first switches of different wiring modules are connected in parallel outside the wiring modules in an intersecting manner, and all the second switches of different wiring modules are connected in parallel outside the wiring modules in an intersecting manner.

The other sides of the first switches serve as respective positive output terminals of the wiring module, and the other sides of the second switches serve as respective negative output terminals of the wiring module.

In FIG. 6b, the structure shown in FIG. 3a is also taken as an example to illustrate that all the positive output terminals of the wiring module are connected in parallel with all the positive output terminals of at least another of the wiring module in a one-to-one correspondence, and all the negative output terminal of the wiring module are connected in parallel with all the negative output terminal of the at least another wiring module. In FIG. 6b, two wiring modules are taken as an example, photovoltaic strings connected to one of the wiring modules are different from photovoltaic strings connected to the other wiring module, and thus the photovoltaic strings are named differently, which is not repeated herein. The connections for more switches and more wiring modules are not repeated herein. All implementations fall within the protection scope of the present disclosure.

(4) Some of the output terminals of the wiring module are connected in parallel inside the wiring module, and the other output terminals are connected in parallel inside the wiring module.

The wiring module has at least one positive output terminal, and each of the at least one positive output terminal is connected to the other side of at least one first switch. The wiring module has at least one negative output terminal, and each of the at least one negative output terminal is connected to the other side of at least one second switch.

For example, in a case that the number of the first switches is greater than 3, some of the first switches are connected in parallel with one positive output terminal inside the wiring module, and the other first switch is connected in parallel with at least another positive output terminal outside the wiring module. In a case that the number of the second switches is greater than 3, some of the second switches are connected in parallel with one negative output terminal inside the wiring module, and the other second switch is connected in parallel with at least another negative output terminal outside the wiring module.

In practical applications, the external connection may be a connection of different output terminals of one wiring module, or an intersected parallel connection of different wiring modules, depending on the application environment. All implementations fall within the protection scope of the present disclosure.

In practical applications, the configuration of the output side of the wiring module may depending on the actual situations. All implementations fall within the protection scope of the present disclosure.

A wiring module is further provided according to another embodiment of the present disclosure. The wiring module includes a first switch and a second switch. A side of each of the first switch serves as a positive input terminal of the wiring module, and is connected to a positive electrode of at least one photovoltaic string. A side of each of the second switch serves as a negative input terminal of the wiring module, and is connected to a negative electrode of at least one photovoltaic string. In a case that both the first switch and the second switch are opened, the photovoltaic strings connected to the wiring module are not connected in parallel in response to opening the first switch and the second switch.

In an embodiment, the other sides of the first switches are connected in parallel, and a parallel connection point serves as a positive output terminal of the wiring module. The other sides of the second switches are connected in parallel, and a parallel connection point serves as a negative output terminal of the wiring module. In an embodiment, the other sides of the first switches serve as respective positive output terminals of the wiring module, the other sides of the second switches serve as respective negative output terminals of the wiring module, the respective positive output terminals are connected in parallel, and the respective negative output terminals are connected in parallel. In an embodiment, the wiring module has at least one positive output terminal, and each of the at least one positive output terminal is connected to the other side of at least one of the first switch; and the wiring module has at least one negative output terminal, and each of the at least one negative output terminal is connected to the other side of at least one second switch. The at least one positive output terminal is connected in parallel, and the at least one negative output terminal is connected in parallel. Alternatively, the at least one positive output terminal of the wiring module is connected in parallel with a positive output terminal of at least another of the wiring module in a one-to-one correspondence, and the at least one negative output terminal of the wiring module is connected in parallel with a negative output terminal of at least another of the wiring module in a one-to-one correspondence.

In an embodiment, the at least one direct-current power supply connected to each of the first switch and the at least one direct-current power supply connected to each of the second switch each are in a quantity of less than or equal to 2. In an embodiment, the at least one direct-current power supply connected to each of the first switch is in a quantity of less than or equal to 2, and the at least one direct-current power supply connected to each of the second switch is in a quantity of less than or equal to 3. In an embodiment, the at least one direct-current power supply connected to each of the first switch is in a quantity of less than or equal to 3, and the at least one direct-current power supply connected to each of the second switch is in a quantity of less than or equal to 2.

In an embodiment, both the first switch and the second switch are opened in response to a fault of at least one of the direct-current power supplies connected to the wiring module; and both the first switch and the second switch are closed in response to no fault or fault recovery of the direct-current power supplies connected to the wiring module.

In an embodiment, the first switch and the second switch each are in a quantity of greater than or equal to 2. In an embodiment, the first switch is in a quantity of 1, and the second switch is equal to the direct-current power supplies connected to the wiring module in quantity. In an embodiment, the first switch is equal to the direct-current power supplies connected to the wiring module in quantity, and the second switch is in a quantity of 1.

In an embodiment, the direct-current power supplies connected to the wiring module is in a quantity of 4, the first switch and the second switch each are in a quantity of 2, each of the first switches is connected to two of the direct-current power supplies, and each of the second switches is connected to two of the direct-current power supplies.

In an embodiment, the direct-current power supplies connected to the wiring module is in a quantity of 5, and the first switch and the second switch each are in a quantity of 3. Two of the first switches each are connected to two of the direct-current power supplies, and the other first switch is connected to one of the direct-current power supplies; and two of the second switches each are connected to two of the direct-current power supplies, and the other second switch is connected to one of the direct-current power supplies.

In an embodiment, the direct-current power supplies connected to the wiring module is in a quantity of 5, the first switch is in a quantity of 3, and the second switch is in a quantity of 2. Two of the first switches each are connected to two of the direct-current power supplies, and the other first switch is connected to one of the direct-current power supplies; and one of the second switches is connected to two of the direct-current power supplies, and the other second switch is connected to three of the direct-current power supplies.

In an embodiment, direct-current power supplies connected to the wiring module is in a quantity of 6, and the first switch and the second switch each are in a quantity of 3. Each of the first switches is connected to two of the direct-current power supplies, and each of the second switches is connected to two of the direct-current power supplies.

In an embodiment, direct-current power supplies connected to the wiring module is in a quantity of 6, the first switch is in a quantity of 3, and the second switch is in a quantity of 2. Each of the first switches is connected to two of the direct-current power supplies, and each of the second switches is connected to three of the direct-current power supplies.

The structure and principle of the wiring module may be referred to the above embodiment, which are not repeated herein. In the wiring module, the positive electrodes and the negative electrodes of the photovoltaic strings are combined in the intersecting manner, and all the switch are opened after a fault, and the photovoltaic strings are completely isolated from each other, avoiding a current loop and an occurrence of fire.

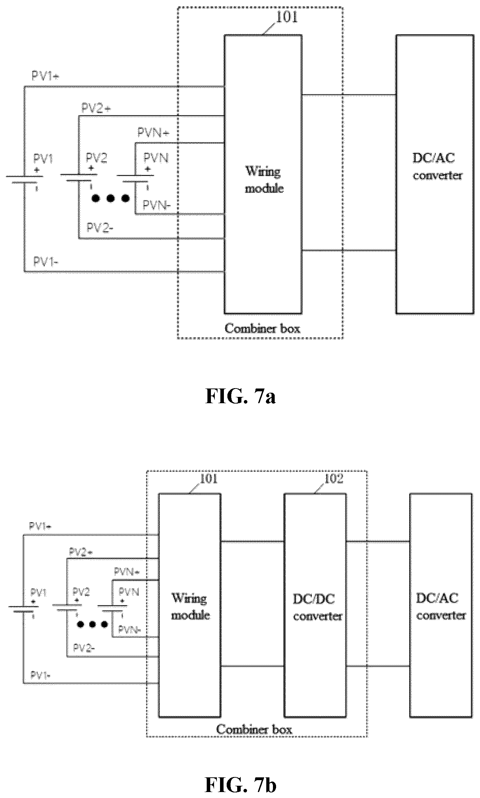

As shown in FIG. 7a, a combiner box is further provided according to another embodiment of the present disclosure. The combiner box includes the wiring module 101 as described in any of the above embodiments.

Each of the input terminals of the wiring module 101 serves as an input terminal of the combiner box. Each of the input terminals of the combiner box is connected to a corresponding direct-current power supply. All the input terminals of the combiner box are connected to N direct-current power supplies, respectively. Each of the direct-current power supplies may be a photovoltaic string, or an energy storage battery. Alternatively, part of the direct-current power supplies are photovoltaic strings and the other direct-current power supplies are energy storage batteries, depending on the application environment. All implementations fall within the protection scope of the present disclosure.

The output terminal of the wiring module 101 is connected to an output terminal of the combiner box, and is connected to a direct-current side interface of a rear-stage converter, such as input terminals of a DC/DC converter or a direct-current bus of a DC/AC converter.

The detailed structure and principle of the wiring module 101 may be referred to the above embodiments, and are not repeated herein. In the combiner box according to the embodiment, the wiring manner of switches is optimized, avoiding the occurrence of short-circuit current between a photovoltaic string in the reverse connection and any photovoltaic string in a proper connection in the event of the reverse connection of the photovoltaic string, thereby effectively achieving fault isolation.

In practical applications, as shown in FIG. 7b, a DC/DC converter 102 is further arranged between the output terminal of the wiring module 101 and the output terminal of the combiner box. In this case, the positive output terminal of the wiring module 101 is connected to a positive input terminal of the DC/DC converter 102, the negative output terminal of the wiring module 101 is connected to a negative input terminal of the DC/DC converter 102, and output terminals of the DC/DC converter 102 are connected to the output terminals of the combiner box for connecting the rear-stage converter.

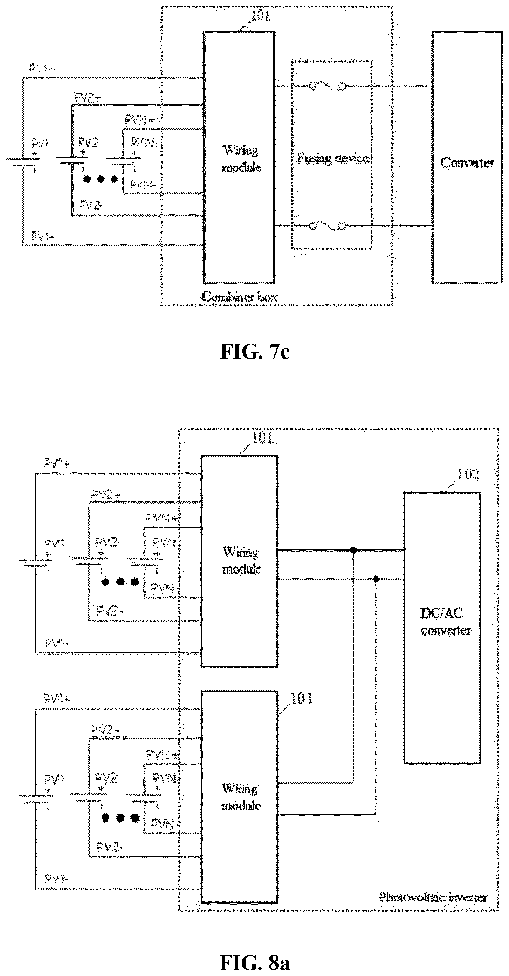

As shown in FIG. 7c (on the basis of taking FIG. 7a as an example), a fusing device may be arranged on an output transmission branch of the wiring module 101, such as a fuse is arranged on a positive transmission branch and a fuse is arranged on a negative transmission branch. In this way, in a case that multiple combiner boxes are connected in parallel, in the event of a reverse connection fault in one of the combiner boxes, the switch of the combiner box is subjected to a large current. The switch is designed to be capable of breaking a large current, in order to achieve reliable breaking. Therefore, the fuse is connected to the output side of the switch, and is configured to normally break a current exceeding a maximum output current of the single combiner box, so that each switch can be designed to be capable of breaking a smaller current.

In a case that the DC/DC converter 102 is arranged in the combiner box, the fusing device is also arranged on the output transmission branch of the wiring module 101, that is, arranged on the front-stage of the DC/DC converter 102, and is not illustrated herein.

As shown in FIG. 8a, a converter is further provided according to another embodiment of the present disclosure. The converter includes a DC/AC converter 102 and at least one of the wiring module 101 according to any one of the above embodiments.

Each of the input terminals of the wiring module 101 serves as an input terminal of the converter. Each of the input terminals of the converter is connected to a corresponding direct-current power supply. All the input terminals of the wiring module 101 are connected to N direct-current power supplies. In practical applications, each of the direct-current power supplies may be connected to the wiring module 101 through a corresponding direct-current interface circuit. Each of the direct-current power supplies may be a photovoltaic string (as shown in FIG. 8a), or an energy storage battery. Alternatively, part of the direct-current power supplies are photovoltaic strings and the other direct-current power supplies are energy storage batteries, depending on the application environment. All implementations fall within the protection scope of the present disclosure.

The output terminals of the wiring modules 101 are connected to a direct-current side of the DC/AC converter 102 through a direct-current bus. An alternating-current side of the DC/AC converter 102 serves as an output terminal of the converter, and is connected to a power grid and/or load through a transformer.

A detailed structure and principle of the wiring module 101 may be referred to the above embodiment, and are not repeated herein. In the converter according to the embodiment, the wiring manner of switches is optimized, avoiding the occurrence of short-circuit current between a photovoltaic string in the reverse connection and any photovoltaic string in the proper connection in the event of a reverse connection of the photovoltaic string, thereby effectively achieving fault isolation.

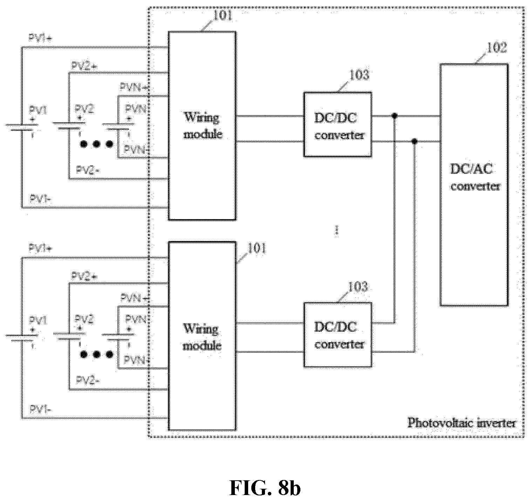

In practical applications, as shown in FIG. 8b, the converter may further include at least one DC/DC converter 103. Input terminals of the DC/DC converter 103 are connected to output terminals of the corresponding wiring module 101. In practical applications, each wiring module 101 may be connected to the input terminals of the corresponding DC/DC converter 103 through a corresponding direct-current filter circuit. Output terminals of the DC/DC converter 103 are connected to the direct-current bus.

In practical applications, the DC/DC converter 103 is in a quantity of greater than 1. The input terminals of each of the DC/DC converters 103 are connected to multiple direct-current power supplies through at least one corresponding wiring module 101. Each of the wiring modules 101 may be connected to different numbers N of the photovoltaic string. In an embodiment, the direct-current power supplies connected to each wiring module 101 are all photovoltaic strings, the converter is a photovoltaic inverter (as shown in FIG. 8a). In an embodiment, the direct-current power supplies connected to each wiring module 101 are all energy storage batteries, the converter is a power conversion system (not shown). In a case that the at least one DC/DC converter is in a quantity of greater than 1, the direct-current power supply connected to at least one of the DC/DC converters 103 through a corresponding wiring module 101 is the photovoltaic string, and the direct-current power supply connected to at least one of the DC/DC converters 103 through a corresponding wiring module 101 is the energy storage battery, the converter is a photovoltaic power conversion system (not shown).

In addition, similar to the above embodiment, the output transmission branch of each of the wiring modules 101 is also provided with a fusing device, which is not described in detail.

The same or similar parts among the embodiments in the specification may be referred to each other, and each of the embodiments emphasizes differences from other embodiments. In particular, the system or system embodiments is basically similar to the method embodiments, and therefore is described relatively briefly. For relevant details, reference can be made to the corresponding description of the method embodiments. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the object of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the modules and steps of each example have been described in general terms of functionality in the above description. Whether these functions are performed in hardware or software depends on the specific application and design constraints of the technical solution. Those skilled in the art may use different methods to implement the described functions for each specific application, but such implementation should not be regarded as exceeding the scope of the present disclosure.

Based on the above description of the disclosed embodiments, the features documented in the various embodiments in this specification may be substituted or combined with each other to enable those skilled in the art to implement or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A wiring module, comprising:
a first switch; and
a second switch; wherein
a side of each of the first switch serves as a positive input terminal of the wiring module, and is configured to connect a positive electrode of at least one direct-current power supply;
a side of each of the second switch serves as a negative input terminal of the wiring module, and is configured to connect a negative electrode of at least one direct-current power supply; and
a direct-current power supply to which any of the positive input terminal is connected and to which any of the negative input terminal is connected is in a quantity of less than or equal to 1.

2. The wiring module according to claim 1, wherein
the other sides of the first switches are connected in parallel, and a parallel connection point serves as a positive output terminal of the wiring module; and
the other sides of the second switches are connected in parallel, and a parallel connection point serves as a negative output terminal of the wiring module.

3. The wiring module according to claim 1, wherein
the other sides of the first switches serve as respective positive output terminals of the wiring module, and the other sides of the second switches serve as respective negative output terminals of the wiring module; and
the respective positive output terminals are connected in parallel, and the respective negative output terminals are connected in parallel.

4. The wiring module according to claim 1, wherein
the wiring module has at least one positive output terminal, and each of the at least one positive output terminal is connected to the other side of at least one of the first switch; the wiring module has at least one negative output terminal, and each of the at least one negative output terminal is connected to the other side of at least one of the second switch, wherein
the at least one positive output terminal is connected in parallel, and the at least one negative output terminal is connected in parallel; or
the at least one positive output terminal is connected in parallel with a positive output terminal of at least another of the wiring module in a one-to-one correspondence, and the at least one negative output terminal is connected in parallel with a negative output terminal of the at least another of the wiring module in a one-to-one correspondence.

5. The wiring module according to claim 1, wherein
the at least one direct-current power supply connected to each of the first switch and the at least one direct-current power supply connected to each of the second switch each are in a quantity of less than or equal to 2;
the at least one direct-current power supply connected to each of the first switch is in a quantity of less than or equal to 2, and the at least one direct-current power supply connected to each of the second switch is in a quantity of less than or equal to 3; or
the at least one direct-current power supply connected to each of the first switch is in a quantity of less than or equal to 3, and the at least one direct-current power supply connected to each of the second switch is in a quantity of less than or equal to 2.

6. The wiring module according to claim 1, wherein both the first switch and the second switch are opened in response to a fault of at least one of the direct-current power supplies connected to the wiring module.

7. The wiring module according to claim 1, wherein both the first switch and the second switch are closed in response to no fault or fault recovery of the direct-current power supplies connected to the wiring module.

8. The wiring module according to claim 1, wherein
the first switch and the second switch each are in a quantity of greater than or equal to 2; the first switch is in a quantity of 1, and the second switch is equal to the direct-current power supplies connected to the wiring module in quantity; or
the first switch is equal to the direct-current power supplies connected to the wiring module in quantity, and the second switch is in a quantity of 1.

9. The wiring module according to any one of claims 1 to 8, wherein the direct-current power supplies connected to the wiring module is in a quantity of 4, and the first switch and the second switch each are in a quantity of 2, wherein
each of the first switches is connected to two of the direct-current power supplies, and each of the second switches is connected to two of the direct-current power supplies.

10. The wiring module according to any one of claims 1 to 8, wherein the direct-current power supplies connected to the wiring module is in a quantity of 5, and the first switch and the second switch each are in a quantity of 3, wherein
two of the first switches each are connected to two of the direct-current power supplies, and the other first switch is connected to one of the direct-current power supplies; and
two of the second switches each are connected to two of the direct-current power supplies, and the other second switch is connected to one of the direct-current power supplies.

11. The wiring module according to any one of claims 1 to 8, wherein the direct-current power supplies connected to the wiring module is in a quantity of 5, and the first switch is in a quantity of 3, and the second switch is in a quantity of 2, wherein
two of the first switches each are connected to two of the direct-current power supplies, and the other first switch is connected to one of the direct-current power supplies; and
one of the second switches is connected to two of the direct-current power supplies, and the other second switch is connected to three of the direct-current power supplies.

12. The wiring module according to any one of claims 1 to 8, wherein the direct-current power supplies connected to the wiring module is in a quantity of 6, and the first switch and the second switch each are in a quantity of 3, wherein
each of the first switches is connected to two of the direct-current power supplies, and each of the second switches is connected to two of the direct-current power supplies.

13. The wiring module according to any one of claims 1 to 8, wherein the direct-current power supplies connected to the wiring module is in a quantity of 6, the first switch is in a quantity of 3, and the second switch is in a quantity of 2, wherein
each of the first switches is connected to two of the direct-current power supplies, and each of the second switches is connected to three of the direct-current power supplies.

14. A wiring module, comprising:
a first switch; and
a second switch; wherein,
a side of each of the first switch serves as a positive input terminal of the wiring module, and is configured to connect a positive electrode of at least one direct-current power supply;
a side of each of the second switch serves as a negative input terminal of the wiring module, and is configured to connect a negative electrode of at least one direct-current power supply; and
the direct-current power supplies connected to the wiring module are not connected in parallel in response to opening the first switch and the second switch.

15. The wiring module according to claim 14, wherein
the other sides of the first switches are connected in parallel, and a parallel connection point serves as a positive output terminal of the wiring module; and the other sides of the second switches are connected in parallel, and a parallel connection point serves as a negative output terminal of the wiring module;
the other sides of the first switches serve as respective positive output terminals of the wiring module, and the other sides of the second switches serve as respective negative output terminal of the wiring module, the respective positive output terminals are connected in parallel, and the respective negative output terminals are connected in parallel; or
the wiring module has at least one positive output terminal, and each of the at least one positive output terminal is connected to the other side of at least one of the first switch; the wiring module has at least one negative output terminal, and each of the at least one negative output terminal is connected to the other side of at least one of the second switch, wherein
the at least one positive output terminal is connected in parallel, and the at least one negative output terminal is connected in parallel; or,
the at least one positive output terminal is connected in parallel with a positive output terminal of at least another of the wiring module in a one-to-one correspondence, and the at least one negative output terminal is connected in parallel with a negative output terminal of at least another of the wiring module in a one-to-one correspondence.

16. The wiring module according to claim 14, wherein
the at least one direct-current power supply connected to each of the first switch and the at least one direct-current power supply connected to each of the second switch each are in a quantity of less than or equal to 2;
the at least one direct-current power supply connected to each of the first switch is in a quantity of less than or equal to 2, and the at least one direct-current power supply connected to each of the second switch is in a quantity of less than or equal to 3; or
the at least one direct-current power supply connected to each of the first switch is in a quantity of less than or equal to 3, and the at least one direct-current power supply connected to each of the second switch is in a quantity of less than or equal to 2.

17. The wiring module according to claim 14, wherein
both the first switch and the second switch are opened in response to a fault of at least one of the direct-current power supplies connected to the wiring module; and
both the first switch and the second switch are closed in response to no fault or fault recovery of the direct-current power supplies connected to the wiring module.

18. The wiring module according to claim 14, wherein
the first switch and the second switch each are in a quantity of greater than or equal to 2; the first switch is in a quantity of 1, and the second switch is equal to the direct-current power supplies connected to the wiring module in quantity; or
the first switch is equal to the direct-current power supplies connected to the wiring module in quantity, and the second switch is in a quantity of 1.

19. The wiring module according to any one of claims 14 to 18, wherein
the direct-current power supplies connected to the wiring module is in a quantity of 4, the first switch and the second switch each are in a quantity of 2, each of the first switches is connected to two of the direct-current power supplies, and each of the second switches is connected to two of the direct-current power supplies;
the direct-current power supplies connected to the wiring module is in a quantity of 5, the first switch and the second switch each are in a quantity of 3, two of the first switches each are connected to two of the direct-current power supplies, and the other first switch is connected to one of the direct-current power supplies; and two of the second switches each are connected to two of the direct-current power supplies, and the other second switch is connected to one of the direct-current power supplies;
direct-current power supplies connected to the wiring module is in a quantity of 5, the first switch is in a quantity of 3, and the second switch is in a quantity of 2; two of the first switches each are connected to two of the direct-current power supplies, and the other first switch is connected to one of the direct-current power supplies; and one of the second switches is connected to two of the direct-current power supplies, and the other second switch is connected to three of the direct-current power supplies;
direct-current power supplies connected to the wiring module is in a quantity of 6, the first switch and the second switch each are in a quantity of 3; each of the first switches is connected to two of the direct-current power supplies, and each of the second switches is connected to two of the direct-current power supplies; or
direct-current power supplies connected to the wiring module is in a quantity of 6, the first switch is in a quantity of 3, and the second switch is in a quantity of 2; each of the first switches is connected to two of the direct-current power supplies, and each of the second switches is connected to three of the direct-current power supplies.

20. A combiner box, comprising the wiring module according to any one of claims 1 to 19, wherein
each of the input terminals of the wiring module serves as an input terminal of the combiner box, and is configured to connect a direct-current power supply; and
an output terminal of the wiring module is connected to an output terminal of the combiner box.

21. The combiner box according to claim 20, wherein the direct-current power supply is a photovoltaic string and/or an energy storage battery.

22. The combiner box according to claim 20, further comprising a DC/DC converter, wherein
the DC/DC converter is arranged between the output terminal of the wiring module and the output terminal of the combiner box.

23. The combiner box according to any one of claims 20 to 22, further comprising a fusing device arranged on an output transmission branch of the wiring module.

24. A converter, comprising:
a DC/AC converter; and
at least one of the wiring module according to any one of claims 1 to 19, wherein
each of the input terminals of the at least one wiring module serves as an input terminal of the converter, and is configured to connect a direct-current power supply;
an output terminal of the at least one wiring module is connected to a direct-current side of the DC/AC converter; and
an alternating-current side of the DC/AC converter serves as an output terminal of the converter.

25. The converter according to claim 24, wherein the direct-current power supply is a photovoltaic string and/or an energy storage battery.

26. The converter according to claim 24, further comprising at least one DC/DC converter, wherein
an input terminal of the at least one DC/DC converter is connected to the output terminal of the at least one wiring module; and
an output terminal of the at least one DC/DC converter is connected to the direct-current side of the DC/AC converter.

27. The converter according to claim 26, wherein
the at least one DC/DC converter is in a quantity of greater than 1, the direct-current power supply connected to at least one of the DC/DC converters is a photovoltaic string, and the direct-current power supply connected to at least one of the DC/DC converters is an energy storage battery.

28. The converter according to any one of claims 24 to 27, further comprising a fusing device arranged on an output transmission branch of the at least one wiring module.
